# DEMANDE DE BREVET EUROPEEN

(11) **EP 2 409 561 A1**
(43) Date de publication de la demande: **25.01.2012**
(21) Numéro de dépôt: 11366001.3
(22) Date de dépôt: 20.07.2011
(51) Int. Cl.: A01C 21/00

(54) **Biofertilisation d'une culture via l'azotobactérisation de la culture précédente**

(30) Priorité: 23.07.2010 FR 1003096
(71) Demandeur: Polyor SARL, 54000 Nancy (FR)
(72) Inventeur: Claude, Pierre-Philippe, 54000 Nancy (FR)

(57) **Abrégé**

Procédé de biofertilisation d'une culture à l'aide d'un inoculum *Azotobacteraceae* et/ou de BFCP azotobactériennes appliqué aux feuillages d'une précédente culture caractérisé en ce que l'inoculum est appliqué dans l'interstice phénologique compris entre le stade de maturité histologique des parties végétatives et le stade de maturité physiologique des parties reproductives de cette précédente culture toujours « sur pieds » et produisant à terme une quantité de résidus pailleux incorporables en surface de sols arables. La culture est une grande culture d'hiver non-*Fabaceae* comprise dans un groupe comprenant les cultures céréalières à pailles, le colza, le lin, voire une culture intermédiaire piège à nitrate (Cipan). Le stade de maturité histologique des parties végétatives de la précédente culture est conforme aux stades phénologiques compris entre indices 55 et 59 des échelles dites de Zadok et/ou BBCH, tandis que le stade de maturité physiologique des parties reproductives de la précédente culture est conforme aux stades phénologiuqes compris entre les indices 73 et 75 des échelles dites de Zadok et/ou BBCH. La quantité de résidus pailleux incorporables en surface de sols arables est de l'ordre d'au moins 5 à 8 tonnes par hectare et elle n'est pas récoltée mais laissée au sol pour fin d'incorporation. De plus, l'inoculum *Azotobacteraceae* et/ou de BFCP azotobactériennes contient avantageusement des cellules bactériennes produisant des auxines principalement *via* l'intermédiaire métabolique qu'est l'IAM (*indole-3-acetamide*) ; il comprend avantageusement entre 1 et 10 x 10¹² cellules *Azotobacteraceae* et/ou de BFCP azotobactériennes et entre 10 et 20 g de tryptophane par dose-hectare.

## Description

### DOMAINE TECHNIQUE DE L'INVENTION

Le domaine technique de l'invention concerne la biofertilisation bactérienne, notamment azotobactérienne (*Azotobacteraceae* et/ou de BFCP azotobactériennes) des grandes cultures agronomiques.

### ÉTAT DE LA TECHNIQUE

### Valorisation microbiologique des résidus de culture au sol par inoculation azotobactérienne

Les BFCP (bactéries favorisant la croissance des plantes) colonisent les racines, les résidus de cultures (pailleux et/ou racinaire), et les engrais organominéraux. Les BFCP appartiennent aux genres, y compris *Agrobacterium, Alcaligenes, Arthrobacter, Azotobacter, Bacillus, Cellulomonas, Erwinia, Flavobacterium, Pseudomonas, (Brady)rhizobium, Xanthomonas, etc..* Les *Azotobacteraceae,* des BFCP azotobactériennes capables de fixer librement l'azote diatomique, elles, sont libres, aérobies et capables de fixer l'azote sans symbioses ; leurs populations, variables dans le sol, mais ne dépassent que très rarement 10² à 10³ par g de sol.

La valorisation microbiologique des résidus de culture pailleux au sol (Claude et Fillion 2004), permet aux BFCP de s'affranchir du flux photosynthétique, minimisant ainsi la ponction des réserves glucidiques de la culture. Il est aussi possible de valoriser ainsi des cultures intermédiaires piège à nitrate (Cipan) peu avant ou après leurs destructions. Ces pratiques nécessitent cependant la pulvérisation exprès d'inocula sur lesdits résidus de culture, engendrant ainsi des coûts pouvant remettre en question l'utilité agronomique et la rentabilité de ces pratiques.

### Endo - et épiphytes dans les phyllosphères

Les endophytes bactériennes peuvent coloniser les tissus internes de la plante sans être phyto-pathogène (Ryan et al. 2008). De telles bactéries peuvent coloniser l'*apoplasme,* les espaces intercellulaires, les cellules aerenchymènes ainsi que les vaisseaux du xylème. Leurs contributions au bilan azoté de la plante, au rendement et à l'efficacité pondérale des engrais sont cependant marginales, vraisemblablement en raison d'un coût métabolique trop important attribuable à la ponction du flux photosynthétique de la plante. En effet, et bien que l'infestation histologique des racines (*rhizosphère*) et/ou du feuillage (*phyllosphère*) par certaine bactéries - *eg. Azorhizobium caulinodans,* soit effective (O'Callaghan et al 2000), ces endophytes ne sont pas efficaces. En effet, AU 2004903788 (WO 2006/005100 A1) rapporte que les teneurs en N des feuilles peuvent augmenter par rapport aux témoins, mais les rendements agronomiques ne sont pas rapportés.

Les bactéries épiphytes colonisent la surface des *phyllosphères.* Ces épiphytes sont présentes, à hauteur d'environ 10⁷ cellules par g de feuillage (Mercier et Lindow 2000), mais ne disposent naturellement que de quelques ug de sucres assimilables par g de feuillage, soit l'équivalent de quelques dizaines de g par hectare (Johan et al. 2001). Il existe aussi des épiphytes bactériennes *méthylotrophes,* notamment les PPFM (*pink pigmented facultative methylotrophes* ; WO 1999/043632 A1) pouvant servir d'inocula foliaires. L'éventuel effet phytogène de telles PPFM dépend de la production de cytokines en présence de méthanol et d'azote fertilisant. Or, les apports de méthanol préconisés sont de l'ordre de 100 L par ha, quantité onéreuse et coûteuse par rapports aux bénéficies agronomiques escomptés. L'état de la technique comprend aussi une invention à base de PPFM, mais cette fois-ci destinée uniquement aux traitements de semences, et sans pour autant revendiquer des augmentations de rendements (US 2006/0228797 A1).

### Stades d'inoculation des épi/endophtytes

Généralement, les plantules de fèves, de riz, de betteraves ou d'avoine sont inoculées bien avant les stades BBCH 55-59, soit bien avant BBCH 39-40 (*i.e*. développement des parties sexuées et/ou récoltables, épis, grains, *etc.* ; Beattie et Lindow 1994 ; Gyaneshwar et al. 2001 ; Lambert et al. 1990 ; Mazzola et White 1994 ; Wilson et al. 1999 ; Elbeltagy et al. 2001). Cependant, Murty 1984 mentionne le prélèvement de plantules de coton non-inoculés aux stades BBCH 55-59 ; il s'agit cependant de prélever que des épiphytes - aucun endophytes, présents naturellement et du coup peu/pas conséquents en terme de diazotrophie (i.e. 1 à 3 kg-N / ha / an). Dans le cas de Sabaratnam et Beatie 2003, l'inoculation des *Pseudomonas* à la fin de la floraison du maïs (BBCH 69-71) servit seulement à comparer le comportement histologique des biovars patho - et non-pathogéniques ; seuls les biovar pathogènes infestèrent l'intérieur des feuilles. Enfin, seul Lovell et al. 2001 mentionnent une infestation des résidus végétaux - des matières sèches des parties aériennes dans les faits, « sur pieds » plutôt qu'au sol. Cela dit, il ne s'agit pas ici d'une culture agronomique mais de *Spartina alterniflora,* une *Poaceae* sauvage des marais salés ; il n'est pas question de grandes cultures et/ou de biofertilisation (azoto)bactérienne.

### Croissance, développement et maturation (sénescence) des parois végétales

La paroi végétale est de texture dispersée, riche en eau et rigide tout en conservant une plasticité qui permet sa croissance sous l'influence des auxines. La fin de la croissance cellulaire des parties végétatives - aux des stades BBCH 55-59, s'accompagne d'un verrouillage de la paroi par des ponts diphénols covalents entre les polypeptides et les acides hydroxy-cinnamiques des hémicelluloses pariétaux. Cette fin de la croissance cellulaire et la mise en place de la paroi secondaire plus cellulosique sont liées car la rigidité pariétale qui en résulte limite et stoppe la plasticité de la paroi primaire.

La croissance et le développement des parois squelettiques en paroi primaires et secondaire est la résultante, (i) d'une méthylation des précurseurs pectiques, leur incorporation dans et/ou sur la paroi - par *intusseception* dans un premier temps, et par apposition par après (Heller et al. 2007 ; pp 55-57), et (ii) d'une dé-méthylation et calcification spontanée de ces mêmes composés pectiques. La paroi est donc le siège de deux tendances - élongation par relâchement et solidification par calcification, la prédominance d'une sur l'autre dictant si la paroi croît ou non.

Les pectines sont relativement - par rapport aux non-*Poaceae*, peu présentes dans les parois des *Poaceae.* Les composés pectiques représentent 35% (p/p) des parois primaires des non-*Poaceae* (di-cotylédons et mono-cotylédon non-*Poaceae*), mais à peine 2 à 10% des parois primaires des *Poaceae* (Wolf et al. 2009). Il existe de nombreuse *pectinases* telles que la PME (*pectin methylesterase*) ; elles sont classées selon leurs modes d'actions entant que lyases (pectate lyase ; EC 4.2.2.10), transferases (polygalactruonase ; EC 3.2.1.15), ou encore la susdite et maintenant fameuse pectin methylesterase, ou PME (pectinesterase ; EC 3.1.1.11).

### Implication des auxines (eg. IAA - acide indole acéditque) et de l'acide abcissique (ABA)

Les auxines - l'IAA du moins, agissent sur les PMT (*pectin methyltransferase* ; EC 3.1.1.11) mais non sur les PME (*pectin methylesterase* ; EC 2.2.2.4). Elles contribuent donc à la méthylation des composés pectiques, mais non à leurs dé-méthylation. L'action des auxines sur la croissance par élongation des parois squelettiques ce fais donc d'une part via la méthylation des précurseurs pectique - au niveau du réticulum endoplasmique il semble, et d'autre part via la déstabilisation du squelette calcifié (pectate) formé à partir de ces précurseurs. La dé-méthylation elle - en présence d'ions calciques, au contraire contribue à la calcification de la paroi squelettique.

Les auxines, y compris d'IAA, en quantités micro-molaires (uM) stimule e développement et la croissance de leurs parois primaires, surtout, et secondaires. Ce développement des parois induits par l'IAA est associée à une acidification appréciable de *l'apoplasme* provoquant un relâchement des parois ; sous l'effet de la turgescence cellulaire, elles ce distendent et reçoivent entre les mailles écarté de leurs parois de nouveaux éléments constitutifs (intussuception ; Heller et al. 2000 ; pp 5-7). Il faut aussi compter sur une action génique des auxines capables de réguler la synthèse de mRNA des protéines nécessaires à ce type de croissance des parois.

L'IAA (auxine) favorise donc la méthylisation des composés pectiques intégrables aux parois squelettiques lors de leur élongation par relâchement des liens calciques dû à une acidification de l'apoplasme. C'est le constat que l'élongation de la paroi squelettique des cellules végétales induite par l'IAA (auxine) et la méthylisation de leurs précurseurs pectiques - elle aussi induite par l'IAA (auxine), sont néanmoins indépendantes l'une de l'autre qui permit de formuler la théorie de la croissance par acidification (*acid growth theory* ; Ordin et al. 1955, Cleland 1962, 1963, Sato 1960 et Ray et Baker 1964, etc.). Cette théorie est réputée (Lüthen et al. 1990 ; Rayle et Cleland 1992 ; Cosgrouve 2001 ; Vanderhoef et Dute 1981 ; Mentze et al. 1977 ; Proseus et Boyer 2007), et applicable aux tissus jeunes en croissance (coléoptiles, radicelles, jeunes feuilles et tiges excisées, etc.) ; elle n'est cependant jamais évoquée en ce qui concerne le traitement des tissus histologiquement plus matures, par exemple au-delà des stades BBCH 55-59.

### Production concomitante de méthanol de VOC

C'est la prédominance de polymères pectate au dépends de pectines méthylées qui est associé à la libération du méthanol des feuilles. La méthylisation des composés pectiques de la paroi par l'action de la PME permet par après la formation spontanés de pont calciques entre les groupements carboxyliques de la pectate, solidifiant ainsi la paroi. Le groupement méthyle lui est - en conditions aérobies, transformé de facto en méthanol émis par les stomates. Donc, bien que les plantes ne synthétisent pas de novo du méthane (Nisbet et al.2009), elles sont néanmoins - en raison du susdit métabolisme pectique des parois squelettiques, capable d'émettre du méthanol.

Chez beaucoup d'espèces - essentiellement des non-*Poaceae*, ces émissions de méthanol sont abaxiale plutôt qu'adaxiale, très corrélés à la conductivité des stomates, l'age et/ou ou la position de la feuille - les feuille plus jeune au sommet de la plante étant plus émettrices, voire à l'application de l'ABA (Nemecek-Marshall et al. 1995). Ce méthanol est le substrat privilégiée des bactéries méthylotrophes et/ou PPFM (Fall et Benson 1996). Enfin, il est important de noter que ces émissions de méthanol ne sont pas directement sous contrôle des auxines, mais qu'accessoirement via la méthylisation initiale des précurseurs pectiques.

### Rôle des auxines - et de leurs précurseurs, dans la colonisation de la phyllosphère

La biosynthèse des auxines - généralement à partir du tryptophane peut être effectuée par six (6) voies métaboliques distinctes (Spaepen et al. 2007), les trois premières étant les plus reconnues ; i) IAM (via *indole-3-acetamide*), ii) IPyA (via *indole-3-pyruvate*), et iii) TAM (via tryptamine). Les trois autres voies métaboliques sont TSO (*tryptophan side-chain oxidase*), IAN (via indole-3-acetonitrile) et indépendamment du tryptophane.

Il est généralement reconnu que les bactéries produisant des auxines via le parcours IAM (Vanderhoff et al. 1981) - parcours présent chez les bactéries et généralement absent chez les plantes, sont plutôt pathogènes, tandis que celles produisant des auxines via le parcours IPyA - la voie métabolique la plus présente chez les plantes, le sont beaucoup moins ; elles sont mêmes parfois phytogènes (Glickmann et Dessaux 1995). Cette prépondérance du parcours IAM chez certains microorganismes phytopathologique est exploitable en agronomie ; Robinson et al. 1998 et Maor et al. 2004 rapportent que le mycoherbicide *Colletotrichum glucosporiodes* produit l'essentiel de son IAA via IAM. Or, cette phytopathogénécité des bactéries produisant des auxines via IAM serait dû au fait que ce parcours métabolique ne générait peu ou pas des intermédiaires moléculaires provoquant une rétroaction négative chez la plante (Patten et Glick 2002, et Patten et Glick 1996 ; Can. J. Microbiol. 42 :207-220) ; la bactérie peut donc fabriquer sans encombre une quantité d'auxines trop importante pour les besoins et/ou le bon fonctionnement de la plante. Au contraire, les bactéries produisant l'IAA via IPyA verront leurs productions d'auxines contraintes une fois un seuil physiologique attient.

En accord avec ce probable rôle des auxines dans la croissance, le développement, et la maturation des parois végétales, y compris et notamment au sein de l'apoplast, c'est donc par l'entremise de l'action des auxines que certaines bactéries endo/épiphytes provoque la fuite de substrats carbonés vers la surface de la phyllosphère (Brandl et al. 2001 ; Brandl et Lindow 1998). Cette fuite des produits de la photosynthèse, bien qu'en principe dommageable pour la plante, contribue à la compétence de certaines bactéries épiphytes.

### Quelques brevets pertinents ?

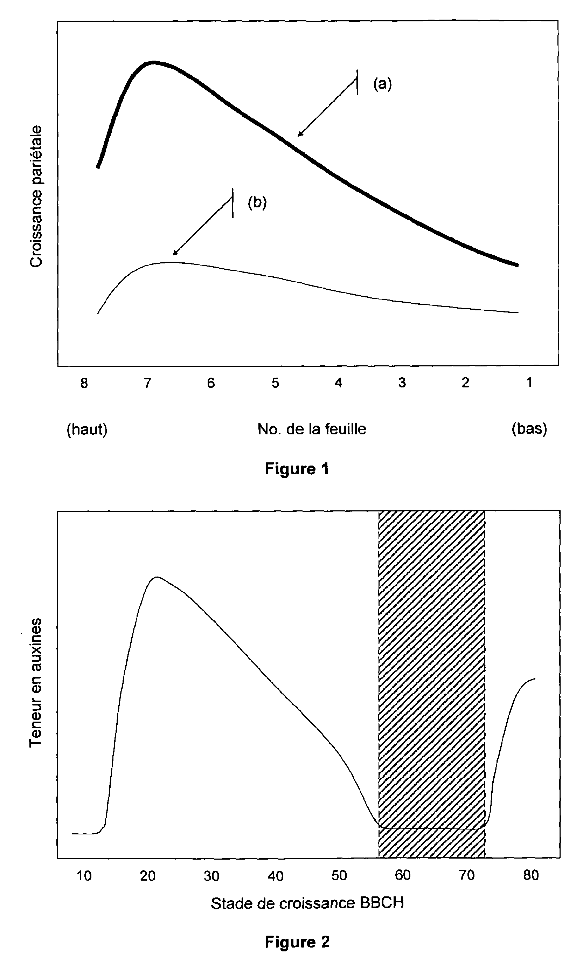

WO 2006/005100 A1 décrit un système favorisant la diazotrophie (microbiologique (sic)) pendant la culture d'une plante. Or, WO 2006/005100 A1 ne divulgue pas un procédé de biofertilisation d'une culture à l'aide d'un inoculum *Azotobacteraceae* et/ou de BFCP azotobactériennes appliqué aux feuillages d'une précédente culture, mais bien aux feuillage de la culture en cours (« during cultivation »). La présente invention elle cible expressément donc une culture autre que la culture en cour, et n'agira sur la culture suivante qu'en ce sens. De plus, cette intervention sur la culture précédant la culture en cours ce fait à des stades de croissances autres que ceux proposés dans WO 2006/005100 A1, à savoir *l'interstice phénologique* (Figure 2) compris entre le stade de maturité histologique des parties végétatives (BBCJ 55-59) et le stade de maturité physiologique (BBCH 73-75) de cette précédente culture. En effet, WO 2006/005100 A1 mentionne des stades d'application touts autres, et du coup beaucoup plus intuitifs, à savoir en période de mobilisation (prélèvement) intense de l'azote - tant foliaire que tellurique, voir accessoirement et comme de raison tout au cours de la période de montaison entre BBCH 31 et 39. Or, la présente invention évite expressément ces stades, et cherche plutôt à appliquer l'inoculum pendant *l'interstice phénologique* quand les teneurs en auxines des cultures sont à leurs plus faibles.

### DIVULGATION DE L'INVENTION

### Problème technique

La bactérisation des résidus de culture pailleux au sol, bien qu'une source abondante de substrat carboné pour les *Azotobacteraceae* et/ou de BFCP azotobactériennes et/ou les BFCP azotobactériennes est problématique. En effet, elle nécessite un passage dédié d'un pulvérisateur tracté ou porté, passage relativement énergivore et souvent difficilement justifiable à la vue de l'efficacité de ce type de bactérisation des résidus de culture au sol, soit de l'ordre de 2 à 3 quintaux de céréales, ou l'équivalent de 25 à 33 kg d'N par hectare d'engrai s-N économisés. Il serait donc avantageux d'apporter les *Azotobacteraceae* et/ou les BFCP azotobactériennes avant la récolte lorsque la culture précédente est toujours « sur pieds ». Pour ce faire, il faut cependant s'assurer que les *Azotobacteraceae* et/ou BFCP azotobactériennes puissent par la suite survivre au sein de la phyllosphère sénescente, servant ainsi du coup et *de facto* à inoculer ces résidus de culture pailleux « en devenir » devant être prochainement incorporés en surface de sols arables. La grande culture d'hiver suivante, avantageusement non-*Fabaceae*, pourra donc bénéficier de cette biofertilisaiton à base *d'Azotobacteraceae* et/ou de BFCP azotobactériennes sans avoir à recourir expressément à une pulvérisation dédiée d'inocula sur les résidus de culture au sol. Cela dit, le risque existe que la présence de tels épi-/endophytes pourrait ponctionner le flux photosynthétique et réduire les rendements. Il faudra donc chercher à minimiser cet impacte sur la culture précédente recevant l'inoculum *d'Azotobacteraceae* et/ou de BFCP azotobactériennes.

### Solution technique

Pour ce faire, je propose d'apporter un inoculum *d'Azotobacteraceae* et/ou de BFCP azotobactériennes directement à la *phyllosphère* de la culture précédant le semis d'une grande culture d'hiver non-*Fabaceae*. Cette culture recevant le dit inoculum sera comme de raison avantageusement une céréale à paille produisant une quantité de résidus pailleux. Nous pouvons envisager ce type d'infestation comme une façon de bactériser les résidus de culture « sur pieds » plutôt « qu'au sol » ; après la récolte, les bactéries qu'abritent les pailles et chaumes pourraient ainsi valoriser ces résidus comme substrat carboné d'autant plus rapidement.

Encore faudra-t-il que cette infestation des *Azotobacteraceae* et/ou des BFCP azotobactériennes ainsi réintroduites dans la phyllosphère de la culture précédente toujours « sur pieds » ne nuise pas à la translocation des produits photosynthétiques vers les grains. Cette *pseudo-pathogénécité* peut être assurée en gérant au mieux le moment de l'application *d'Azotobacteraceae* et/ou de BFCP azotobactériennes (AZB), et en ajoutant une dose de tryptophane (TRP) précurseur d'IAM et/ou d'IAA- une auxine, responsables en partie de cette colonisation. En effet, la production d'IAA (auxine) *via* le parcours IAM - plutôt qu'IPyA moins pathogène, devrait favoriser l'incrustation des cellules *Azotobacteraceae* et/ou des BFCP azotobactériennes dans la phyllosphère, *phyllosphère-résidusphère,* et cela sans pour autant provoquer de pathologies. En effet, un stade d'application aux environs de BBCH 55-59 et au plus tard avant BBCH 73-75, nous assure que les *Azotobacteraceae* et/ou BFCP azotobactériennes n'ont aucune chances - faute de temps, de provoquer une pathologie. En effet, si appliqués stratégiquement dans cette interstice phénologique entre BBCH 55 - 75, « infectuosité » des *Azotobacteraceae* et/ou des BFCP azotobactériennes sur la culture précédente sera inconséquente toute en favoriserant par après la présence des *Azotobacteraceae* et/ou de BFCP azotobactériennes dans la résidusphère.

Le potentiel de croissance pariétale des dernières feuilles - les plus « jeunes » en haut de la plante, est donc très faible ; l'application d'auxines - et/ou plus simplement d'une de leurs précurseurs tel que le tryptophane (TRP), à ce stade serait dont à première vue incongru aux yeux de l'homme de métier. J'ai schématisé graphiquement à la Figure 1 l'intensité des activités liées à la croissance des paroi végétale (croissance pariétale) de donc à la croissance et au développement des feuilles d'une céréale selon la position - et donc l'âge, de la feuilles, les feuilles (6-8) du haut de la plante étant plus jeunes que celles au bas (1-2) de la plante. A noter qu'une fois un certain stade de développement franchi - i.e. aux alentours de BBCH 55-59 (pleine épiaison), les différences entre la croissance pariétale des différentes feuilles d'estompe.

Il est donc aussi incongru pour l'homme de métier d'appliquer des auxines et/ou leurs précurseurs sur des tissues histologiquement matures. Il est tout aussi inutile - en principe, de le faire peu après le début de l'anthèse, disons au alentour du stade BBCH 65-69. En effet, chez les plantes, et notamment les angiosperme y compris les *Poaceae*, les teneurs en auxines endogènes réaugmentent à ce stade du fait du développement rapide des grains de pollens en germination, des ovules, des caryopses et l'ensemble des l'appareil reproducteur, fécondé le cas échéant, ces processus nécessitant comme de raison un développement rapide des parois végétales. Cela dit, cette ré-augmentation des teneurs en auxines est cette fois-ci surtout limité aux parties florales et reproductives (Lur et Setter 1993 ; Yang et al. 2001) ; les feuilles elles tendent à rapidement s'appauvrir en auxines (Jin-juan et al. 2004). Entre les stades de mi-épiaison (Z 55-59) et de mi-floraison (Z 65-69) il existe donc une « fenêtre » pendant laquelle les teneurs en auxines des tissues - reproducteurs et végétatifs, sont relativement faibles, fenêtre de deux à trois semaines pendant laquelle l'apport d'IAA (auxine) exogène pourrait donc être conséquente. J'ai schématisé graphiquement à la Figure 2 la teneur en auxines des plantes (céréales) selon leurs stades de croissance et de développement BBCH. Entre les stades BBCH 55-59 et au-delà de BBCH 73-75, soit temporellement une période d'au moins 2 à 3 semaines en milieux tempérés, les teneurs en auxines de la plante - y compris donc des parties florales et reproductives post BBCH 70, sont en principe faibles. Cet interstice entre BBCH 55 : 75 représente donc une « fenêtre d'opportunité » (Figure 2) pour la mise en oeuvre de la présente invention.

La croissance et le développement cellulaire des parois squelettiques est beaucoup plus dynamique aux stades BBCH 31-40 qu'aux stades BBCH 55-59. A ces stades plus avancés, les feuilles sont histologiquement matures, et les phénomènes a-d ne sont plus considérés par l'homme de métier comme importants. Or, nous avons pu observer que cette atténuation des processus de croissance et de développement peut en soi être mise à contribution. En présence d'inocula *Azotobacteraceae* et/ou de BFCP azotobactériennes ce relâchement très partiel de la paroi squelettique peu propice à une infestation (incrustation) importante, voire pathogénique, des feuilles, permet néanmoins une infestation très limitée - nécessairement non-pathogénique, des phyllosphères, du moins suffisamment pour permettre auxdites *Azotobacteraceae* et/ou de BFCP azotobactériennes de « s'incruster » dans ces matières végétales toujours « sur-pieds », i.e. dans les faits des résidus de culture pailleux (au sol) en devenir. Pour faire simple, disons que l'invention permet de cibler *l'interstice phénologique* (Figure 2) entre la maturation histologique des parties végétatives (BBCH 55-59) et la maturation physiologique des parties reproductives (BBCH 73-75) au profit de la culture suivante, mais pas au dépends de la culture en cours.

Enfin, dans la mesure où les *Azotobacteraceae* et/ou de BFCP azotobactériennes, comme les *Pseudomondaceae,* produiraient des auxines principalement via IAM plutôt que via IPyA, intermédiaire qui s'avère rétroagir négativement avec la production d'IAA du fait de sont implication dans la synthèse d'auxines chez la plante - ce qui n'est pas le cas avec pour IAM, leurs présences dans les phyllosphères pourraient être ainsi mieux assurées. Il est donc en principe - tenant compte du susdit interstice phénologique avantageux, d'utiliser des Azotobacteracea IAM positives dans l'inoculum.

Il y a donc deux composantes à la solution technique ;
➢ une application stratégique, dès les stades BBCH 55-59 et au plus tard aux alentours des stades BBCH 73-75, d'un inoculum, dit « AZB », d'*Azotobacteraceae* et/ou de BFCP azotobactériennes productrices d'auxines, avantageusement via IAM plutôt qu'IPyA ;
➢ un précurseur d'auxines - le tryptophane (TRP) au sein de la formulation inoculantes ;

Plus précisément il s'agit d'un procédé de biofertilisation d'une culture à l'aide d'un inoculum *Azotobacteraceae* et/ou de BFCP azotobactériennes appliqué aux feuillages d'une précédente culture caractérisé en ce que l'inoculum est apporté dans l'interstice phénologique compris entre le stade de maturité histologique des parties végétatives et le stade de maturité physiologique des parties reproductives de cette précédente culture toujours « sur pieds » et produisant à terme une quantité de résidus pailleux incorporables en surface de sols arables. La culture est une grande culture d'hiver non*-Fabaceae* comprise dans un groupe comprenant les cultures céréalières à pailles, le colza, le lin, voire une culture intermédiaire piège à nitrate (Cipan). Le stade de maturité histologique des parties végétatives de la précédente culture est conforme aux stades phénologiques compris entre indices 55 et 59 des échelles dites de Zadok et/ou BBCH, tandis que le stade de maturité physiologique des parties reproductives de la précédente culture est conforme aux stades phénologiuqes compris entre les indices 73 et 75 des échelles dites de Zadok et/ou BBCH. La quantité de résidus pailleux incorporables en surface de sols arables est de l'ordre d'au moins 5 à 8 tonnes par hectare et elle n'est pas récoltée mais avantageusement laissée au sol pour fin d'incorporation. De plus, l'inoculum *Azotobacteraceae* et/ou de BFCP azotobactériennes contient avantageusement des cellules bactériennes produisant des auxines principalement *via* l'intermédiaire métabolique qu'est l'IAM (*indole-3-acetamide*) ; il comprend avantageusement entre 1 et 10 x 10¹² cellules *Azotobacteraceae* et/ou de BFCP azotobactériennes par dose-hectare. Cet inoculum comprend aussi par dose-hectare une certaine quantité d'auxines, voire plus avantageusement de leurs précurseurs tel que le tryptophane (TRP), soit entre 1 et 50, plus particulièrement entre 5 et 25, et avantageusement entre 10 et 20 g de tryptophane par dose-hectare. II s'agit donc aussi d'un inoculum *Azotobacteraceae* et/ou de BFCP azotobactériennes pour la biofertilisation d'une grande culture d'hiver non-*Fabaceae* appliqué au feuillage d'une précédente culture produisant une certaine quantité de résidus de culture pailleux.

L'application de l'invention peut être combinée avec d'autre agents foliaire, par exemple un agent azoto-nutritionnel (ANN) foliaire appliqué aux alentours des stades BBCH 55-59. Il existe tels ANN - notamment Phyléas™, qui peuvent avantageusement être intégrés à la bouillie pulvérisable. Cette pulvérisation d'ANN étant en soi défendable d'un point de vue azoto-nutritionnel, l'apport des *Azotobacteraceae* et/ou de BFCP azotobactériennes peut être à ce stade perçue que comme co-formulant plutôt que comme matière active vis-à-vis de la culture en cour. A ce stade, certaines cultures peuvent encore bénéficiers de l'application de produits phytosanitaires. L'application de tels produits, notamment d'ANN, permet de véhiculer AZB sans avoir à recourir à un passage dédié du pulvérisateur.

Il est aussi possible de combiner ou remplacer cet ANN avec une simple dose de molybdène (Mo) - à hauteur de 5 g-Mo par hectare par exemple. Ce Mo peut être lui aussi apporter en même temps que l'inocula AZB + TRP au sens de la présente invention, voire à un autre moment, lors d'un traitement fongicide par exemple, ou encore l'application d'un « raccourcisseur » de paille.

Comme tout protocole de biofertilisation azotobactérienne impliquant des résidus de culture pailleux au sol, la présente invention bénéficiera d'une fertilisation raisonnée comportant avantageusement un pilotage intra-saisonnier des apports fractionnés d'engrais azotés (eg. Jubil™, Hydro N-Testeur™, etc.). En l'absence de tels protocoles de fertilisation raisonnée, l'effet d'AZB au sens de la présente invention pourrait être plus difficilement appréciable. En de telles situations, la susdites dose-hectare de Mo pourrait être particulièrement avantageuse évitant le non-fonctionnement de l'appareille diazotrophe des biomasses azotobactérienne et un sur-immobilisation de l'azote minéral.

### Avantages apportés et activité inventive

L'invention permet de bactériser les résidus de culture pailleux « sur - pieds » avant la récolte d'une culture céréalière. Les résidus de culture au sol sont dont en ce sens « pré - inoculés » avant même leur enfouissement, ce qui facilite ce type de biofertilisation en réduisant son coût. En effet, il n'est plus nécessaire de prévoir un passage pulvérisateur dédié expressément à l'inoculation des résidus de culture au sol. De plus, agir sur la décalcification - et donc l'élongation, par relâchement des parois squelettiques des *Poaceae* histologiquement mature - *i.e*. au-delà des stades BBCH 55-59, est contraire aux préjugés et habitudes de l'homme du métier ; *i.e.* à ce stade - i.e. post Z55-59, l'élongation par décalcification est jugée comme inutile puisque la méthylation des précurseurs de la pectine est à toute fin pratique en bout de course, et pourrait être en e sens contreproductive. En effet, et pour ce qui concerne les cultures céréalières et d'un point de vue histologique plutôt que physiologique, les feuilles et les tiges sont matures dès les stades BBCH 55-59 atteints. Intervenir à ce stade avec un inoculum azotobactériens afin de coloniser que partiellement les phyllosphères dans l'espoir de provoquer un quelconque effet BFCP (dit « PGPR » ; plant growth promoting rhizobacteria) est un contresens aux yeux de l'homme du métier. *Idem* pour ce qui concerne l'application d'auxines et/ou de leurs précurseurs ; l'élongation des parois n'étant plus d'actualité, aucun effet positif n'est à espérer. En effet, cette notion d'inoculer les résidus « sur pieds » est nouvelle et ne fait l'objet d'aucun développement commercial, exception fait de la canne à sucre. Pour cause ; un éventuel effet positif sur le rendement et/ou la fourniture en azote ne sera détectable que sur la culture suivante.

### BRÈVE DESCRIPTION DES DESSINS ET FIGURES

- **Figure 1** :: Représentation graphique schématisée de l'intensité des activités liées à la croissance des paroi végétale (croissance pariétale) de donc à la croissance et au développement des feuilles d'une céréale selon la position - et donc l'age, de la feuilles, les feuilles (6-8) du haut de la plante étant plus jeunes que celles au bas (1-2) de la plante. A noter qu'une fois un certain stade de développement franchi - i.e. aux alentours de BBCH 55-59 (pleine épiaison), les différences entre la croissance pariétale des différentes feuilles d'estompe ; a - répartition des taux de croissance pariétale avant BBCH 55-59, b - répartition des taux de croissance pariétale après BBCH 59.
- **Figure 2** :: Teneur en auxines des plantes (céréales) selon leurs stades de croissance et de développement. Entre les stades BBCH 55-59 et au-delà de BBCH 73-75, soit temporellement une période d'au moins 2 à 3 semaines en milieu tempéré, les teneurs en auxines de la plante - y compris des parties florales et reproductives post BBCH 73-75, sont très faibles. Cet interstice phénologique BBCH 55 - 75 représente donc une « fenêtre d'opportunité » pour la mise en oeuvre de la présente invention.

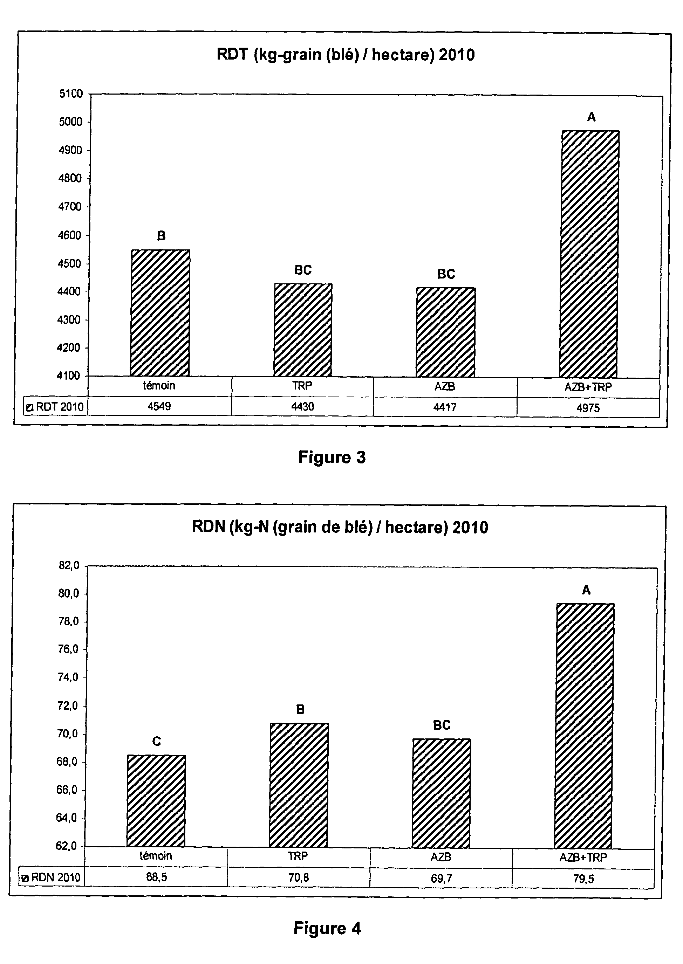

- **Figure 3 :**: Représentation graphique des rendements (RDT ; poids (kg) des grains par hectare) au stade BBCH 87 en 2010 selon la modalité expérimentale, y compris le témoin sans azotobactérisation (AZB) ou tryptophane (TRP). Les modalités associées aux mêmes lettrages ne sont pas significativement différentes (selon Newman-Keuls ; α = 1 %).
- **Figure 4 :**: Représentation graphique des mobilisations d'azote (RDN ; exportation d'N par les grains en kg-N par hectare) au stade BBCH 87 en 2010 selon la modalité expérimentale, y compris le témoin sans azotobactérisation (AZB) ou tryptophane (TRP). Les modalités associées aux mêmes lettrages ne sont pas significativement différentes (selon Newman-Keuls ; α = 1%).

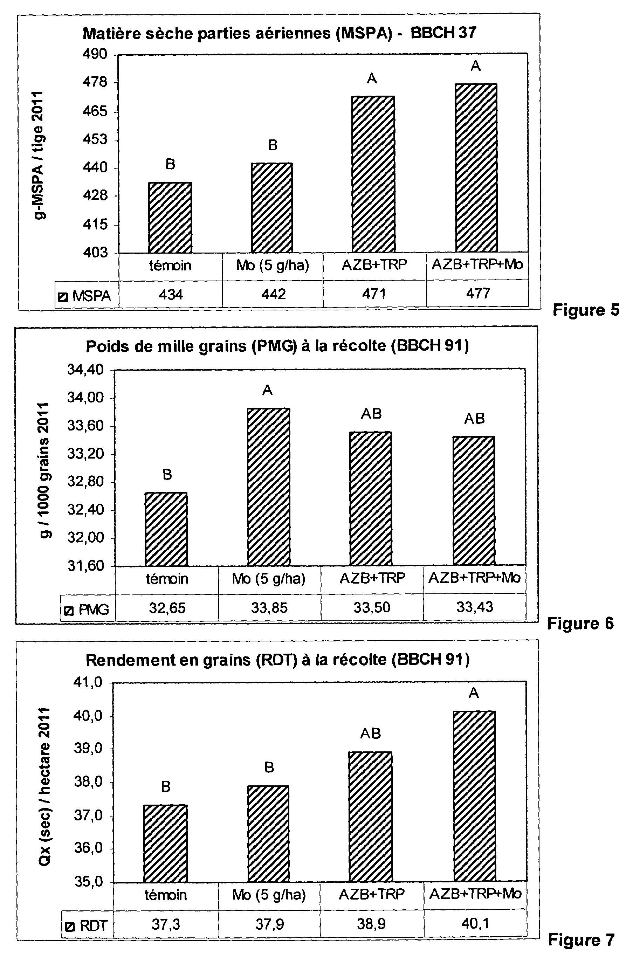

- **Figure 5 :**: Représentation graphique des matières sèches des parties aériennes (MSPA ; g par tiges récolté) produites au stade BBCH 37 en 2011 selon la modalité expérimentale, y compris le témoin sans azotobactérisation (AZB+TRP) ou molybdène (Mo). Les modalités associées aux mêmes lettrages ne sont pas significativement différentes (selon Fisher-LSD ; α = 1 %).
- **Figure 6 :**: Représentation graphique des poids de mille grains (PMG ; g) à la récolte (BBCH 91) en 2011, selon la modalité expérimentale, y compris le témoin sans azotobactérisation (AZB+TRP) ou molybdène (Mo). Les modalités associées aux mêmes lettrages ne sont pas significativement différentes (selon Fisher-LSD ; α = 1 %).
- **Figure 7 :**: Représentation graphique des rendements agronomiques (RDT ; quintaux par hectare) à la récolte (BBCH 91) en 2011 selon la modalité expérimentale, y compris le témoin sans azotobactérisation (AZB+TRP) ou molybdène (Mo). Les modalités associées aux mêmes lettrages ne sont pas significativement différentes (selon Fisher-LSD ; α = 1 %)

### MODE DE REALISATION PREFERE DE L'INVENTION

Les grandes cultures non-légumineuses concernées sont avantageusement les céréales, le colza et/ou le lin. Étant donnée la nature édaphique et commensale des BFCP diazotrophes (azotobactériennes) ainsi recherchées, il est avantageux de procéder à leurs production en masse par voie de fermentation à l'état solide, et plus particulièrement modulaire tel décrit et proposé dans FR 06/00014 et FR05/05753. Il est préconisé - selon l'état de la technique et sans préjuger d'éventuelles avancées techniques, d'apporter entre 1 et 10 x 10¹² cellules azotobactériennes viables et correctement formulées par hectare. En ce sens, la mise en oeuvre de la biofertilisation azotobactériennes proposée par Claude et Fillion 2004 peut servir ici de référence.

### Obtention des biomasses azotobactériennes (AZB)

L'invention est réalisable avec toutes les BFCP azotobactériennes (AZB) au sens entendu et donc capables de fixer librement l'azote diatomique et susceptibles de valoriser microbiologiquement les résidus de culture pailleux au sol, voire les biomasses Cipan (*cultures intermédiaires, pièges* à *nitrates*), non-*Fabaceae* surtout, incorporés à la surface des sols arables. Ces biomasses AZB peuvent être obtenues conventionnellement selon l'état de l'art microbiologique, voire plus avantageusement en tenant compte des caractéristiques pédologiques du sol et/ou de la parcelle. Par exemple, et plus particulièrement ici, il est reconnu que les phyllosphères sénescentes sont dans les faits des résidus de cultures pailleux enfouis au sol post-récolte et donc partie intégrante d'un échantillon de sol intègre ; celui-ci peut avantageusement servir à la constitution desdites cultures mères, selon le protocole décrit dans FR 01/15442 par exemple.

Lors du premier essai agronomique 2009-2010 (voir *infra*), les inocula avec et sans TRP ont été préparées à partir de lots - quatre en tout, de 50 g de résidus de culture pailleux hachés et tamisés à 2 mm et étuvés à 65 degrés C pendant 45 minutes (pas d'autoclavage) afin d'en atténuer la flore non-azotobactérienne. Vingt-cinq (25) grammes de fines particules de sols - ici d'un sol de la région de Thann (68700, France ; Tableau 1), tamisées à 250 um sont intégrés à chacun de ces lots, le mélange résultant étant disposé dans bacs plastiques appropriés. A ces mélanges (i.e. 50 g desdits résidus pailleux + 25 g desdites fines particules de sol) 50 ml d'eau déminéralisée comprenant un minimum de Mo en guise de cofacteur de la nitrogenase azotobactérienne. Le mélange est par la suite pré-incubé pendant 10 à 12 jours à température ambiante (i.e. ∼ 21 degrés C) ; en situations bio-industrielle plus optimales, le temps de pré-incubation peut être avantageusement réduit à un minimum. Cette pré-incubation assure la prolifération de la flore azotobactérienne endogène au sol, et/ou aux résidus pailleux ; cette prolifération fait donc office de fermentation à l'état solide. Ces lots d'*Azotobacteraceae* et/ou de BFCP azotobactériennes - quatre lots de 75 g chacun, sont combinés et placés dans 3 L d'eau (déminéralisée). Cette suspension semi-liquide est filtrée à 167 um de façon à retenir les fines particules de sol qui pourraient intervenir avec la pulvérisation liquide de cette bouillie (FR 05/05753). Deux (2) litres de cette bouille sont ainsi obtenus ; une dose-hectare d'une biomasse AZB peut aussi être envisagée.

**Tableau 1 : Caractérisation physico-chimique du sol alsacien**

| Paramètre | Unité | Valeur |
|---|---|---|
| Argile | % | 27,0 |
| LF/LG | Na | 1,72 |
| Sables fins | % | 18,1 |
| pH (eau) | Na | 5.7 |
| Matière organique | g/kg-sol | 55,5 |
| CEC | mÉq/kg-sol | 101 |
| Saturation CEC | % | 56 |
| P₂O₅ assimilable | mg/kg-sol | 37 |
| K₂O échangeable | mg/kg-sol | 80 |
| MgO échangeable | mg/kg-sol | 200 |
| - CaO échangeable | mg/kg-sol | 1850 |
| Zn-DTPA | ug/kg-sol | 700 |

Il est aussi possible, plus simplement, d'obtenir une BFCP azotobactérienne au sens entendue et de la cor-formuler le moment venu avec une dose-hectare de TRP équivalente à environ et par exemple 20 g (voir Essai-1 2009-2010), voir avantageusement avec une dose-hectare de Mo équivalente à environ et par exemple 5 g (voir Essai-2 2010-2011).

### (Co)formulation et application des biomasses azotobactériennes

Afin de favoriser le relâchement des parois végétales, la plante étant peu enclin à le faire à ce stade (Z 55-59) du fait de la maturation histologique de ses feuilles, une certaine dose de précurseurs auxigéniques - du tryptophane (TRP) notamment, est apporté avec l'inoculum AZB. Mieux : étant donnée le stade avancé de cette maturation histologique des feuilles, la dégradation - ou du moins la déméthylisation de leurs parois squelettiques s'accélère, rendant les composés C1 (méthane, méthyle, méthanol notamment) plus disponibles aux méthylotrophies épiphytes. Les doses-hectare de TRP - à la lumière de l'état de la technique actuelle et/ou de considérations économiques, sont avantageusement comprises entre 5 et 50 g, une dose-hectare de l'ordre de 10 à 20 g étant la plus raisonnable. Par exemple, ici, une dose-hectare équivalente à 10 g de TRP est ajouté à une moitié de cette bouillie (Modalité D) et non à l'autre (Modalité C ; les modalités A et B étant les témoins non-inocula respectifs). Ces modalités peuvent maintenant être appliquées par pulvérisation liquide des *matières fraiches des parties aériennes* (MFPA) sur-pieds - ici une orge de printemps au stade BBCH 54-56 (mi-épiaison), à l'aide de l'équivalent de 100 à 360 L d'eau par hectare, au choix et par exemple.

Afin de biofertiliser la culture d'hiver suivante, et cela sans perturber la phase de remplissage des grains post BBCH 55-59, l'invention préconise donc l'application sur la culture en cour - avec l'inoculum *Azotobacteraceae* et/ou de BFCP azotobactériennes, un complément à base de tryptophane (TRP) précurseur d'IAA (auxine) entre les stades BBCH 55-59 et BBCH 71-73 (Figure 2), période pendant laquelle les teneurs en auxines de la plante sont particulièrement déprimées. Cette présence de TRP-IAA (auxine) permettra de - exceptionnellement, relâcher les parois végétales sans pour autant retarder la maturation histologique des feuilles, retard qui pourrait autrement perturber le remplissage de grains.

Afin de cadrer avec des pratiques culturales existantes, l'invention peut être réalisée lors de l'application conjointe d'un agent azoto-nutritionnel (ANN) dès la mi/fin-épiaison (BBCH 55-59), voire plus librement au sens de FR 09/00867. Tel que déjà mentionné, il existe actuellement sur le marché de tels ANN, y compris Phyléas™ (www.phyleas.com) et Optéine™ (Goëmar, France).

### APPLICATIONS BIOINDUSTRIELLES ET AGRONOMIQUES

Pour démonter l'applicabilité de l'invention, j'ai mené sur trois ans deux (2) essais agronomiques, sur une même parcelle (*cf*. Tableau 1), sol d'origine ayant servi à la préparation de l'inoculum pour le premier essai.

### Essais 1 2009-2010

Une parcelle de céréale à paille a été donc repérée dans le département du Haut Rhin en Alsace (France) comportant un sol arable du même type que celui caractérisé au Tableau 1. Une fois cette culture d'orge de printemps ayant attient le stade BBCH 55-59, soit environ mi-épiaison, les préparations inoculantes et leurs témoins (voir infra) au sens de la présente invention ont été appliquées. La disposition des quatre (4) modalités en bandes essais comprend dont les modalités suivantes ;
(A) témoin ne recevant que le l'eau déminéralisée
(B) témoin recevant l'équivalent une dose de 20 g de tryptophane (TRP) par hectare
(C) inoculation azotobactérienne (*Azotobacteraceae* et/ou BFCP azotobactériennes) des résidus de culture « sur-pieds » mais ne comprenant pas de TRP.
(D) inoculation *Azotobacteraceae* et/ou de BFCP azotobactériennes des résidus de culture « sur-pieds » comprenant ladite dose-hectare de TRP (voir B).

Pour ce premier essai 2009-2010 j'ai utilisé ici la préparation produite directement à partir d'échantillon du sol d'origine décrit au Tableau 1). Un premier passage de pulvérisateur autoporté est effectué sur la longueur de la parcelle (12 x 15 = 180 m) sur une largeur de 6 m afin d'appliquer la suspension inoculante - dite AZB ici, préalablement préparée (voir *supra*) ; un volume pulvérisable de 100 à 300 L, ou encore selon les règles de l'art et sans compromettre la survie des cellules *Azotobacteraceae* et/ou de BFCP azotobactériennes, et prévu. Immédiatement à côté de cette bande traitée est située une bande appariée non-traitée (i.e. pulvérisation d'eau). Ces deux bandes de 180 x 6 m sont par la suite entrecoupées à tous les 15 m de bandes perpendiculaires avec et sans application de l'équivalent de la dose - hectare (dha) de tryptophane - dit TRP ici. Chaque parcelle fait donc 90 m2 (15 m x 6 m). Cette disposition - biaisée, des quatre (4) modalités en bandes non - répliquées est donc recherchée et propre à ce type d'expérimentation *in situ* (voir Bermudez et Mallarino 2002, 2004).

Peu après la récolte de cette culture cible - ici, l'orge de printemps, les résidus de culture pailleux sont incorporés au sol. Il est recommandé de broyer les pailles afin d'en facilité l'enfouissement et la dégradation ; sur des micro-parcelles expérimentales telles que celles-ci, il est important d'effectuer ce broyage dans le même sens que la récolte, les pailles ainsi broyées ayant tendance à être projetées vers l'arrière, ce qui contribuera à compenser pour le transport ver l'avant de ces paille par la moissonneuse. Afin d'incorporer ces résidus pailleux, il n'est pas absolument nécessaire de les labourer ; un bon « disquage » permet d'intégrer l'essentiel de ces résidus en surface (8 à 10 cm).

La culture de rapport suivante - ici un blé d'hiver, avantageusement semée pas trop tard afin de profiter au maximum de l'effet du traitement « sur pieds » desdits résidus de culture pailleux (d'orge) maintenant incorporés au sol. La date de semis fut le 14 octobre 2009, la variété de blé d'hivers Alixan, et la densité de semis 34 kg/ha ou 330 graines/m². Il y eu par après des apports de 180 kg/ha de nitrate d'ammonium à 27% (47 kg-N/ha) le 16/03/10 et de 230 kg/ha le 08/04/10 (62 kg-N/ha). La récolte définitive par l'agriculteur (BBCH 91) eu lieu le 15 juillet 2010. Il est aussi avantageux de recourir à une fertilisation raisonnée avec pilotage intra- saisonnier (eg. Jubil®, N-Tester® ; voir Claude et Fillion 2004 pour un exemple d'application). A noter que si cette fertilisation raisonnée pilotée n'est pas réalisable, mieux vaux opter pour une parcelle à faible rendement, voire pour une parcelle en agriculture dite « biologique », parcelle sur laquelle les faibles teneurs en N rétroagirons que faiblement avec la nitrogenase des *Azotobacteraceae* et/ou des BFCP azotobactériennes.

J'ai suivi les paramètres agronomiques suivants ; EPM - nombre (n) d'épis par m² au stade BBCH 87, GRE - g de grains par épi au stade BBCH 87, RDT - kg de grain par hectare (EPM x GRE), RDN - kg-N mobilisé par RDT par hectare (RDT x %N-grain), NBR - nombre (n) de grains par épis, et le PMG - poids de mille grains (g).

L'analyse statistique des sources de variance provenant des parcelles ainsi disposées en bandes est complexe. Il faut dans un premier temps ajuster les valeurs pour chacune des parcelles en fonction de l'interaction multiplicative (*multiplicative interaction* ; « MI » - Milliken et Johnson 1989) provenant du fait que les répétitions sont disposées en blocs non-perpendiculaires à d'éventuels gradients, d'une part, et que les modalités A, B, C et D ne sont pas disposées aléatoirement. Concrètement, on additionne à chacune des 24 valeurs parcellaires (6 x 4 (ABCD)) le produit des valeurs propres (λ) pour chacune des axes factorielles (au nombre de 6-1 = 5) et de l'interaction des τᵢ et βⱼ, soit l'effet moyen des traitements et des « blocs », respectivement (Milliken et Johnson 1989, chapitres 1 à 3, et plus particulièrement Moreno-Gonzalez et al. 2003a et 2003b.

Une fois ce premier ajustement effectué, la composante additive du model peut être estimée. Il s'agit d'estimer en propre l'effet des modalités A, B, C et D (*additive main effet* ; « AM » - Milliken et Johnson 1989) à l'aide d'une simple Anova (analyse de variance), l'interaction de celles-ci avec les blocs au long du dispositif en bandes ayant été déjà pris en compte par le susdit ajustement MI. L'analyses combinant ces deux étapes, AM et MI est dite « AMMI » (*additive main-effect, multiplicative interaction mode*/), et est donc particulièrement bien adaptée au traitement des données provenant de tels dispositifs *in situ* « en bandes ».

J'ai rapporté aux figures 3 et 4, respectivement, les rendements agronomiques en grains (RDT ; qx/ha) et la mobilisation (exportation) de l'azote par ce grain (RDN ; kg-N/ha). L'interaction AZB X TRP au profit d'une telle azotobactérisation (AZB) « sur-pieds » des biomasses « proto-pailleuse » est notable ; à noter ici et en ce sens la relative inefficacité d'AZB seule, d'où le rôle central du TRP au sens de la présente invention.

### Essai 2 2010-2011

Sur la même parcelle utilisée pour l'essai 2009-2010 comportant cette fois-ci un blé d'hiver « sur pieds », j'ai appliqué une nouvelle fois quatre (4) modalités A, B, C et D, légèrement différentes cependant cette fois-ci, à savoir ;
➢ A : témoin non-traité
➢ B : pulvérisation foliaire BBCH 61 de 5-g Mo par hectare
➢ C : pulvérisation foliaire BBCH 61 d'AZB selon la présente invention (i.e. + TRP)
➢ D : pulvérisation foliaire BBCH 61 d'AZB+TRP+Mo (B + C)

Comme de raison, les modalités AZB comprennent ici le TRP au sens de la présente invention, l'essai 2010-2011 devant simplement démonter qu'il est possible de « doper » (optimiser) encore plus l'efficacité de cette préparation avec du Mo, cofacteur métallique nécessaire au fonctionnement *in situ* de la nitrogenase azotobactérienne.

Le 31/05/2010, j'ai ajouté à 15 L d'eau potable 1 L d'une pré-bouillie contenant 2 g de TRP et l'équivalent d'un 10^{ième} d'une dose-hectare d'*Azotobacteracea* ; ces BFCP azotobactériennes ont été gracieusement fournit par Agronutrition SAS (31700 Carbonne, France). Les modalités-parcelles C et D ont été pulvérise avec cette bouillie au stade BBCH 61, systématiquement jusqu'à épuisement desdits 15 L. Il s'agissait ainsi de couvrir la moitié du dispositif, soit environs 1/10^{ième} d'hectare. Dans la foulée et par après j'ai appliquée une dose-hectare de 5 g-Mo (sans AZB, sans TRP) de la même manière mais cette fois-ci aux modalités-parcelles B et D. Cette dose-hectare de Mo peut être dans les faits appliquée ainsi, soit simultanément au sein de la bouille inoculante, soit en fin de saisons directement sur les résidus de culture pailleux au sol ; au choix.

Une fois cette culture précédente de blé d'hiver traitée au sens de la présente invention et selon les quatre (4) susdites modalités, la culture de rapport, une orge d'hiver cette fois-ci, fut implantée. Il s'agit d'une orge à 6-rangs (escourgeon), variété Nikel™ semée les 27 septembre 2010 à une densité de 450 graines par m². Il y eu par après un apport de 415 kg/ha d'ammonitrate (26%) le 07/03/2011 (soit 108 unités d'N), d'un herbicide (Madit™ à 2 kg/ha + Boston à 3,5 Uha le 29/03/2011, d'un « raccourcisseur » (Moddus™) à 0.6 Uha le 06/04/2001, ainsi qu'un fongicide (Nebraska™) à 1,25 Uha le 16/05/2011. La récolte définitive par l'agriculteur fin juin 2001.

J'ai par la suite établis, dès le 10 avril 2011 (BBCH 37) les matières sèches des parties aériennes (MSPA ; g / tiges). Les données ont été analysés statistiquement *via* l'approche dite AMMI décrite ci-haut lors de l'essai 1 (2009-2010). A la récolte (BBCH 91), à partir d'une centaine de tiges prélevées aléatoirement au centre de chacune des parcelles, j'ai pu aussi établir le poids de mille grains (PMG ; g / 1000 grains), ainsi qu'un estimé du rendement agronomique (RDT ; quintaux / hectare) pour chacune des 24 parcelles.

Dès le stade BBCH 37 (dernière feuille est juste visible) la production de MSPA est plus appréciable avec AZB (Figure 5). Or, à la récolte, l'ensemble des parcelles traitées ont un poids de mille grains (PMG) supérieurs au témoin (Figure 6). Cela dit, c'est la combinaison AZB (+TRP) + Mo qui seule rend significativement plus que le témoin bien qu'AZB (+TRP) sans Mo est elle aussi bien orientée (Figure 7). La présence de Mo, ici à hauteur de 5 g par hectare, permet donc en de telles situations de mieux assurer la réalisation de l'invention, surtout ici dans le cas d'une culture à très faible rendement et d'une relative accumulation de résidus de culture pailleux. En effet, ce faible rendement 2011 - attribuable à la sécheresse printemps-été 2011, est aussi tributaire d'une accumulation de résidus de culture pailleux au sol provoquant d'autant plus une forte demande en Mo de la flore azotobactérienne, voire une forte (sur)immobilisation de l'azote. Or, une fois cet azote minéral immobilisé, cette flore azotobactérienne pourra amorcer sont développement diazotrophe, du moins et dans la mesure où le Mo n'est pas limitatif. Dans le cas contraire et/ou suite à 2 ou 3 campagnes des retours pailleux, l'efficacité apparente d'AZB - y compris ici selon la présente invention, ne sera pas nécessairement optimale sans un complément de Mo. En effet, le développement des populations azotobactériennes du sol est limité par la disponibilité du Mo. Lorsqu'apporté aux résidus de culture pailleux au sol, ce cofacteur enzymatique peut donc être parfois bénéfique en lui même au rendement, ou plus exactement ici au PMG (Figure 6). En combinaison à AZB au sens de la présente invention, l'effet du Mo est par contre encore plus remarquab (RDT ; Figure 7). Donc, en situations ou l'azotobactérisation des résidus de culture pailleux au sol ne peut bénéficier d'une fertilisation raisonnée, et/ou si l'accumulation des résidus pailleux est importante, l'apport d'une dose complémentaire de Mo est recommandable. Ce Mo permettra aux *Azotobacteraceae* et/ou BFCP azotobactériennes maintenant d'autant plus nombreuses en proximité des résidusphères de passer rapidement en mode diazotrophe dès que les teneurs en azote minéral du sol sont suffisamment faibles pour éviter la rétroaction négative la nitrogenase.

### Sigles et définitions

***Azotobacteraceae* et/ou de BFCP azotobactériennes (AZB)** : désignation fonctionnelle et/ou taxonomique d'un groupe - alias une famille, de bactéries Gram-négatives, sous forme de bâtonnets de 1 à 3 um au stade végétatif et parfois de kystes plutôt circulaires, avec ou sans flagelle selon le cas, et surtout avantageusement capables de réduire à haut régime de l'azote diatomique par aérobiose. Cette dernière caractéristique, voire le développement d'une certaine polyploïdie, définie ici fonctionnellement et systématiquement lesdites *Azotobacteraceae*. D'un point de vue plus génomique et biomoléculaire, les *Azotobacteraceae* et/ou de BFCP azotobactériennes comprennent vraisemblablement l'ensemble des *Pseudomonaceae* capables de dlazotrophie au même régime dans les mêmes conditions.

**Échelles Zadok (Z) et/ou BBCH** : échelles numériques décrivant schématiquement les stades phénologiques des principales cultures agronomiques et fourragères. Elles s'échelonnent de 01 à 99 et comportent dix (10) sous-divisions, une pour chacune des principales étapes (germination, montaison, gonflement, maturation des grains, etc.). Je considère ici que les échelles BBCH et Zadok sont interchangeables.

**Histologiquement mature** : ce rapporte surtout aux parties végétatives de la plante (culture) au moment ou sa croissance structurelle (tiges, feuilles, épi, racines) s'estompe aux alentours des stades Z/BBCH 55-59. En termes physiologiques, à ce stade les « sources » photosynthétiques sont en places voir en bout de course. **Interstice phénologique** : voir Figure 2 et texte *supra.*

**Phyllosphère** : par analogie avec la rhizosphère, le volume immédiatement intra- et/ou extra- (endo- / ecto/) cuticulaire du feuillage, voire plus simplement des partie aériennes d'une céréale avant lé début de la maturation des grains. Il s'agira ici donc non seulement des feuilles à proprement parler, mais aussi les gaines des feuilles, des brins, voire des épis encore verts.

**Physiologiquement mature** : ce rapporte surtout aux parties reproductive de la plante (culture) au moment ou le remplissage des grains est quasi complet est les graines ont attient leurs tailles finales mais sont toujours vertes, soit aux alentours des stades Z/BBCH 73-75. En terme physiologiques, à ce stade les « puits » sont remplis bien que leurs contenus doivent maintenant entreprendre leurs maturations.

**Précédente culture** : la culture en place immédiatement avant la culture à biofertiliser. C'est elle qui recevra directement l'inoculum *Azotobacteraceae* et/ou de BFCP azotobactériennes selon la présente invention. **Résidusphère** : par analogie avec la notion de rhizosphère plus reconnue, il s'agit du volume édaphique entourant immédiatement un brin de résidus de culture - pailleux plus particulièrement ici ; fonctionnellement, la résidusphère ne s'étend à guère plus de 4 à 5 mm desdits résidus de culture, soit la distance de migration apparente des solutés carbonés provenant de leurs dégradations *in situ.*

**Stade phénologique** : Période-repère individualisée dans la croissance ou le développement d'une plante pendant laquelle peuvent intervenir des pathologies spécifiques. (selon Inra) ; voir comme de raisons les échelles Zadok et/ou BBCH.

### Références

Bermudez , M. et A.P. Mallarino. 2002. Yield and Early Growth Responses to Starter Fertilizer in No-Till Corn Assessed with Precision Agriculture Technologies. Agron. J. 94:1024-1033.
Bermudez, M. et A.P. Mallarino. 2004. Corn Response to Starter Fertilizer and Tillage across and within Fields Having No-Till Management Histories. Agron. J. 96:776-785 (2004).
Brandl, M.T. et S.E. Lindow. 1998. Contribution Of Indole-3-Acetic Acid Production to The Epiphytic Fitness of Erwinia Herbicola. Applied and Environmental Microbiology, Sept. 1998, P. 3256-3263 Vol. 64, No. 9
Brandl, M.T., B. Quinn et S.E. Lindow. 2001. Heterogeneous Transcription of An Indoleacetic Acid Biosynthetic Gene In Erwinia Herbicola On Plant Surfaces. Pnas 98(6): 3454-3459
Beatie, Gwyn A. and Steven E. Lindow. 1994. Survival, Growth, and Localization of Epiphytic Fitness Mutants of Pseudomonas Syningae On Leaves. Appl. Environ. Microbiol., Vol. 60, No. 10, 3790-3798
Claude, P-P. et M. Giroux. 2006. Effet des engrais organo-minéraux inoculés (EOMI) sur la croissance des plants de maïs-grain, les rendements, les prélèvements des éléments nutritifs et la qualité des grains. Agrosolutions 17 : 51-64.
Claude, P-P. et L. Fillion. 2004. Effet de l'apport d'un Inoculum bactérien aux résidus de culture de maïs-grain au Sol sur le rendement et la qualité de blés d'hiver panifiables en France. Agrosolutions 15(1) : 23-29.
Cleland, R. 1963. The Occurrence Of Auxin-Induced Pectin Methylation In Plant Tissues. Plant Physiol. Pp. 738-740
Cletand, R. 1962. Independence Of Effects Of Auxin On Cell Wall Methylation & Elongation. Plant Physiol. Pp. 12-18
Cosgrove, D.J. 2001. Wall Structure and Wall Loosening. A Look Backwards and Forwards. Plant Physiol 125 : 131-134,
Elbeltagy, A., K. Nishioka, T. Sato, H. Suzuki, B. Ye, T. Hamada, T. Isawa, H. Mitsui et K. Minamisawa. 2001. Endophytic Colonization and In Planta Nitrogen Fixation By A Herbaspirillum Sp. Isolated From Wild Rice Species. Appl. Environ. Microbiol., P. 5285-5293 Vol. 67, No. 11
Fall, R et A.A. Bensen. 1996. Leaf Methanol. Trends In Plant Science - Reviews. Vol. 1 (9) : 296.
Heller, R., R Esnault et C. Lance. 2000. Physiologie Végétale : 2. développement. (6ième edition, Dunod, Paris).
Glickmann, E et Y. Dessaux. 1995. A Critical Examination of the Specificity of the Salkowski Reagent for Indolic Compounds Produced by Phytopathogenic Bacteria. Appl. Environ. Microbiol., p. 793-796 Vol. 61, No. 2
Gyaneshwar, P., E.K. James, N. Mathan, P. M. Reddy, B. Reinhold-Hurek, et Jagdish K. Ladha. 2001. Endophytic Colonization Of Rice By A Diazotrophic Strain Of Serratia Marcescens. J. Bacteriol. 183 : 2634-2645
Jin-juan, FAN, LI Xue-mei , XU Zheng-jin, ZHANG Li-jun. 2004. Relationship Between Changes in Leaf Endogenous Hormone Contents and Senescence During Grain Filling Stage of a Rice Hybrid and its Parents. Rice Science 11 (4): 200-204 http://www.ricescience.org
Johan H., J. Leveau and Steven E. Lindow. 2001. Appetite of An Epiphyte: Quantitative Monitoring of Bacterial Sugar Consumption In The Phyllosphere. Pnas, Vol. 98 No. 6, P. 3446-3453
Lambert B., Henk Joos, Sabine Dierickx, Robert Vantomme, Jean Swings, Karel Kersters, et Marc Van Montagu. 1990. Identification et Plant Interaction of a Phyllobacterium Sp.,A Predominant Rhizobacterium of Young Sugar Beet Plants. Appl. Environ. Microbiol., P. 1093-1102 Vol. 56, No. 4
Lovell, C.R., M.J. Friez, J.W. Longshore. et C.E. Bagwell. 2001. Recovery and Phylogenetic Analysis Of Nifh Sequences From Diazotrophic Bacteria Associated With Dead Aboveground Biomass Of Spartina Alterniflora. Appl. Environ. Microbiol., P. 5308-5314 Vol. 67, No. 11
Lur, Huu-Sheng et Tim Setter. 1993. Role of Auxin in Maize Endosperm Development ; Timing of Nuclear DNA Endoreduplication, Zein Expression, and Cytokinin. Plant Physiol. 103: 273-280
Luthen, H. M. Bigdon, et M. Bottger. 1990. Reexamination of the Acid Growth Theory of Auxin Action. Plant Physiol. 93, 931-939
Maor, Rudy, Haskin, Sefi, Levi-Kedmi, Hagit, Sharon, Amir. 2004. In Planta Production of Indole-3-Acetic Acid by Colletotrichum gloeosporioides f. sp. Aeschynomene. Appl. Envir. Microbiol. 70: 1852-1854
Mazzola, M, White, F F. A mutation in the indole-3-acetic acid biosynthesis pathway of Pseudomonas syringae pv. syringae affects growth in Phaseolus vulgaris and syringomycin production. J. Bacteriol. 176: 1374-1382
Mentze, J., B. Raymond, J.D. Cohen, et D.L. Rayle. 1977. Auxin-Induced H+ Secretion In Helianthus and lts Implication. Plant Physiol. 60, 509-512
Mercier, Julien and S. E. Lindow. 2000. Role Of Leaf Surface Sugars in Colonization of Plants by Bacterial Epiphytes. Applied and Environmental Microbiology 66(1) : 369-374
Milliken, GA. et DE. Johnson. 1989. Analysis of messy data - Volume 2 : Non replicated experiments (edition 2000). Chapman and Hall/CRC (London, New-York).
Moreno-Gonzalez, J., J. Crossa et P. L. Cornelius. 2003a. Additive Main Effects and Multiplicative Interaction Model: I. Theory on Variance Components for Predicting Cell Means. Crop Sci. 43:1967-1975
Moreno-Gonzalez, J., J. Crossa et P. L. Cornelius. 2003b. Additive Main Effects and Multiplicative Interaction Model: II. Theory on Shrinkage Factors for Predicting Cell Means. Crop Sci. 43:1976-1982
Murty, M. G.. 1984. Phyllosphere of Cotton As A Habitat For Diazotrophic Microorganisms. Applied and Environmental Microbiology, Vol. 48, No. 4, P. 713-718
Nemecek-Marshall, M., R.C. Macdonald, J.J. Franzen, C. Wojciechowski, et Ray Fall. 1995. Methanol Emission From Leaves.: Enzymatic Detection Of Gas-Phase Methanol et Relation Of Methanol Fluxes To Stomatal Conductance et Leaf Development. Plant Physiol. 108: 1359-1 368
Nisbet, R.E.R, R Fisher, R.H Nimmo, D.S Bendall, P.M Crill, A.V Gallego-Sala, E.R.C Hornibrook, E López-Juez, D Lowry, P.B.R Nisbet, E.F Shuckburgh, S Sriskantharajah, C.J Howe et E.G Nisbet. 2009. Emission Of Methane From Plants. Proc. R. Soc. B 276, 1347-1354
O'Callaghan, Kenneth J., Philip J. Stone, Xiaojia Hu, D. Wynne Griffiths, Michael R. Davey, and Edward C. Cocking. 2000. Effects of Glucosinolates and Flavonoids On Colonization of the Roots of Brassica Napus by Azorhizobium Caulinodans Ors571. Appl. Environ. Microbiol., P. 2185-2191 Vol. 66, No. 5
Ordin, L., Robert Cleland, et James Bonner. 1955. Influence of Auxin on Cell-Wall Metabolism. Plant Physiology Vol. 41: 1023-1029
Patten, C.L. et B.R. Glick. 2002. Role of Pseudomonas putida Indoleacetic Acid in Development of the Host Plant Root System. Appl. Environ. Microbiol., p. 3795-3801 Vol. 68, No. 8
Proseus, T.E. et John S. Boyer. 2007. Tension Required For Pectate Chemistry To Control Growth In Chara Corallina. Journal Of Experimental Botany, Vol. 58, No. 15/16, Pp. 4283-4292.
Ray, P.M. et David B. Baker. 1964. The Effect of Auxin on Synthesis of Oat Coleoptile Cell Wall Constituents. Plant Physiology 1964 Pp. 353-360
Rayle, D.L. et R.E. Cleland. 1992. The Acid Growth Theory of Auxin-Induced Cell Elongation is Alive and Well. Plant Physiol. 99, 1271-1274
Robinson, M., Riov, J., Sharon, A. 1998. Indole-3-Acetic Acid Biosynthesis in Colletotrichum gloeosporioides f. sp. Aeschynomene. Appl. Envir. Microbiol. 1998 64: 5030-5032
Ryan, R.P., K. Germaine, A. Franks, D.J. Ryan & D.N. Dowling. 2008. Bacterial Endophytes: Recent Developments and Applications. Fems Microbiol Lett 278 : 1-9
Sabaratnam, Siva and Gwyn A. Beattie. 2003. Differences Between Pseudomonas Syringae Pv. Syringae B728a and Pantoea Agglomerans Brt98 In Epiphytic and Endophytic Colonization Of Leaves. Applied and Environmental Microbiology, Vol. 69, No. 2, 1220-1228
Sato, C.S. 1960. The Effect Of Indole-3-Acetic Acid On Formaldehyde Metabolism. The J. Biol Chem. Vol. 235, No. 7, Pp. 2087-2091
Spaepen. S., J. Vanderleyden & R. Remans. 2007. Indole-3-Acetic Acid In Microbial et Microorganism-Plant Signalling. Fems Microbiol Rev 31 (2007) 425-448
Steven E. Lindow and Maria T. Brandl. 2003. Microbiology of The Phyllosphere. Appl. Environ. Microbiol. 69 : 1875-1883
Vanderhoef, L.N. et R.R. Dute. 1981. Auxin-Regulated Wail Loosening and Sustained Growth In Elongation. Plant Physiol. 67, 146-149
Wolf, S., G. Mouille et J. Pelloux. 2009. Homogalacturonan Methyl-Esterification and Plant Development. Molecular Plant · Volume 2 · Number 5 · Pages 851-860
Weisz, R., C.R. Crozier et R.W. Heiniger. 2001. Optimizing Nitrogen Application Timing in No-Till Soft Red Winter Wheat. Agron. J. 93:435-442 (2001).
Wilson, M., S. S. Hirano, and S. E. Lindow. 1999. Location and Survival of Leaf-Associated Bacteria In Relation To Pathogenicity and Potential For Growth Within The Leaf. Appl. Environ. Microbiol., P. 1435-1443 Vol. 65, No. 4
Yang, Jianchang, Jianhua Zhang, Zhiqing Wang, Qingsen Zhu, and Wei Wang. 2001. Hormonal Changes in the Grains of Rice Subjected to Water Stress during Grain Filling. Plant Physiology, Vol. 127 : 315-323

## Revendications

1. Procédé de biofertilisation d'une culture à l'aide d'un inoculum *Azotobacteraceae* et/ou de BFCP azotobactériennes appliqué aux feuillages d'une précédente culture **caractérisé en ce que** l'inoculum est appliqué dans l'*interstice phénologique* compris entre le stade de maturité histologique des parties végétatives et le stade de maturité physiologique des parties reproductives de cette précédente culture toujours « sur pieds » et produisant à terme une quantité de résidus pailleux incorporables en surface de sols arables.

2. Procédé de biofertilisation d'une culture à l'aide d'un inoculum *Azotobacteraceae* et/ou de BFCP azotobactériennes selon la revendication 1 **caractérisé en ce que** la culture est une grande culture d'hiver non-*Fabaceae* comprise dans un groupe comprenant les cultures céréalières à pailles, le colza, le lin, voire une culture intermédiaire piège à nitrate (Cipan).

3. Procédé de biofertilisation d'une culture à l'aide d'un inoculum *Azotobacteraceae* et/ou de BFCP azotobactériennes selon une quelconque des revendications précédentes **caractérisé en ce que** le stade de maturité histologique des parties végétatives de la précédente culture est conforme aux stades phénologiques compris entre indices 55 et 59 des échelles dites de Zadok et/ou BBCH.

4. Procédé de biofertilisation d'une culture à l'aide d'un inoculum *Azotobacteraceae* et/ou de BFCP azotobactériennes selon une quelconque des revendications précédentes **caractérisé en ce que** le stade de maturité physiologique des parties reproductives de la précédente culture est conforme aux stades phénologiuqes compris entre les indices 73 et 75 des échelles dites de Zadok et/ou BBCH.

5. Procédé de biofertilisation d'une culture à l'aide d'un inoculum *Azotobacteraceae* et/ou de BFCP azotobactériennes selon une quelconque des revendications précédentes **caractérisé en ce que** la quantité de résidus pailleux incorporables en surface de sols arables soit de l'ordre d'au moins 5 à 8 tonnes par hectare et qu'elle ne soit pas récoltée mais laissée au sol pour fin d'incorporation.

6. Procédé de biofertilisation d'une culture à l'aide d'un inoculum *Azotobacteraceae* et/ou de BFCP azotobactériennes selon une quelconque des revendications précédentes **caractérisé en ce que** les l'inoculum contient avantageusement des cellules bactériennes produisant des auxines principalement *via* l'intermédiaire métabolique qu'est l'IAM (*indole-3-acetamide*).

7. Procédé de biofertilisation d'une culture à l'aide d'un inoculum *Azotobacteraceae* et/ou de BFCP azotobactériennes selon une quelconque des revendications précédentes **caractérisé en ce que** l'inoculum comprend avantageusement entre 1 et 10 x 10¹² par dose-hectare de cellules *Azotobacteraceae* et/ou de BFCP azotobactériennes.

8. Procédé de biofertilisation d'une culture à l'aide d'un inoculum *Azotobacteraceae* et/ou de BFCP azotobactériennes selon une quelconque des revendications précédentes **caractérisé en ce que** l'inoculum comprend par dose-hectare une certaine quantité d'auxines, voire plus avantageusement de leurs précurseurs tel que le tryptophane.

9. Procédé de biofertilisation d'une culture à l'aide d'un inoculum *Azotobacteraceae* et/ou de BFCP azotobactériennes selon la revendication précédente **caractérisé en ce que** l'inoculum comprend entre 1 et 50, plus particulièrement entre 5 et 25, et avantageusement entre 10 et 20 g de tryptophane par dose-hectare.
